# EUROPEAN PATENT APPLICATION

(11) **EP 4 415 273 A1**
(43) Date of publication of application: **14.08.2024**
(21) Application number: 23155368.6
(22) Date of filing: 07.02.2023
(51) Int. Cl.: H04B 7/04

(54) **A METHOD FOR WIRELESS TRANSMITTING A DATA SIGNAL IN THE SURROUNDINGS BY A SIGNAL TRANSMISSION SYSTEM, A COMPUTER PROGRAM PRODUCT, A COMPUTER-READABLE STORAGE MEDIUM AS WELL AS A SIGNAL TRANSMISSION SYSTEM**

(71) Applicant: Siemens Aktiengesellschaft, 80333 München (DE)
(72) Inventor: Michailow, Nicola, 81825 München (DE)
(74) Representative: Siemens Patent Attorneys

(57) **Abstract**

The invention relates to a method for wireless transmitting a data signal (18, 20) in surroundings (22) by a signal transmission system (10), comprising the steps of:
- generating a first data signal (18) by a transmission device (12) of the signal transmission system (10), wherein the first data signal (18) comprises an information for a reflection angle (α) to be set by a reconfigurable intelligent surface device (14);
- transmitting the first data signal (18) to a first receiving device (36) of the reconfigurable intelligent surface device (14);
- generating a second data signal (20) by the transmission device (12), wherein the second data signal (20) is a working signal;
- transmitting the second data signal (20) to a second receiving device of the reconfigurable intelligent surface device (14);
- generating a control signal (44) for controlling a status of metamaterials of the reconfigurable intelligent surface device (14) depending on the first data signal (18); and
- reflecting the second data signal (20) by the reconfigurable intelligent surface device (14) with the transmitted reflection angle (α).

Furthermore, the invention relates to a computer program product, a computer-readable storage medium as well as to a signal transmission system (10).

## Description

The present invention relates to a method for wireless transmitting a data signal in the surroundings by a signal transmission system according to the independent claim 1. Furthermore, the present invention relates to a corresponding computer program product, a corresponding computer-readable storage medium as well as to a corresponding signal transmission system.

In the context of radio frequency communication, so-called reconfigurable intelligent surfaces (RIS) or intelligent reconfigurable surfaces (IRS) are programmable metamaterials, which allow to programmatically change phase, amplitude, frequency, and/or polarization of an incoming signal. This means that they can be used as programmable reflectors or absorbers. The individual elements of the reconfigurable intelligent surfaces RIS are controlled by a so-called RIS controller. The power supply is used to power the RIS controller. The power supply is not used to amplify the reflected signal. The RIS array consists of many small elements. The size of each element depends on in which frequency band operation is intended.

As of today, the parameters of the reconfigurable intelligent surfaces, for example the angle at which an incoming signal should be reflected, are provided either manually, for example by a human expert, or programmatically, for example by a network management system to the reconfigurable intelligent surface controller, which in turn calculates the configurations for each element of the reconfigurable intelligent surface array. As of today, there is no method known, where a wireless transmitter directly controls a reflection of the wireless signal.

It is an object of the invention to provide a method, a computer program product, a computer-readable storage medium as well as a signal transmission system by which a data signal can be transmitted in an efficient way.

This object is solved by a method, a corresponding computer program product, a corresponding computer-readable storage medium as well as a corresponding signal transmission system. Advantageous forms of embodiments are presented in the dependent claims.

One aspect of the invention relates to a method for wireless transmitting a data signal in the surroundings by a signal transmission system. A first data signal is generated by a transmission device of the signal transmission system, wherein the first data signal comprises an information for a reflection angle to be set by a reconfigurable intelligent surface device. The first data signal is transmitted to a first receiving device of the reconfigurable intelligent surface device. A second data signal is generated by the transmission device, wherein the second data signal is a working signal. The second data signal is transmitted to a second receiving device of the reconfigurable intelligent surface device. A control signal for controlling a status of metamaterials of the reconfigurable intelligent surface device is generated depending on the first data signal. The second data signal is reflected by the reconfigurable intelligent surface device with the transmitted reflection angle.

Therefore, a method is provided by which the wireless transmitter, in particular the transmission device, controls the reflection angle of the wireless signal by the reconfigurable intelligent surface device.

Therefore, the transmission device can directly control the propagation of its emitted wireless working signal through the environment. This provides unprecedented flexibility and is integral for autonomous and collaborating IoT (Internet of Things) systems.

Therefore, the reconfigurable intelligent surface device, in particular the controller of the reconfigurable intelligent surface device, receives parameters for the array wirelessly from the transmission device. The transmission device uses a single antenna to form two signal beams, one for the control information and one for the payload information (Working signal).

According to an embodiment, the first data signal and the second data signal are directly transmitted, in particular to the corresponding receiving device. In particular, the first data signal and the second data signal are targeted to the corresponding receiving devices. For example, the first data signal is directed to the first receiving device and the second data signal is directed to the second receiving device. Therefore, small interference between the first data signal, the second data signal and other signals in the surroundings may be provided, wherein a high quality of data transmission is realized.

In another embodiment, the second data signal is transmitted to a further receiving device of the signal transmission system. In particular, the further receiving device is hidden relative to the transmission device. For example, the receiving device may be hidden by an object. In particular, there is no line of sight between the transmission device and the further receiving device. The reconfigurable intelligent surface device therefore operates like a mirror and may transmit/mirror the second data signal from the transmission device via the reconfigurable intelligent surface device to the further receiving device. Therefore, a communication between the transmission device and the further receiving device may be provided, wherein the transmission device and the further receiving device is not in line of sight.

According to another embodiment, the working signal is a communication signal comprising a payload. For example, the communication signal may be a 5G communication signal or a 6G communication signal. The payload may comprise information which has to be received by the further receiving device. Therefore, an efficient way for communicating between the transmission device and the further receiving device is provided.

In another embodiment, the working signal is a sensing signal for capturing an information of the surroundings. For example, the sensing signal may be a radar signal. Therefore, the surroundings, which may also be hidden by an object, can also be sensed/captured by mirroring the second sensing signal by the reconfigurable intelligent surface device. Therefore, an efficient way for capturing surroundings, in particular surroundings which are not in sight of the transmission device, may be captured.

In another embodiment, the transmission device is configured as a multiple input multiple output device. In particular, the multiple input and multiple output (MIMO) is a method for multiplying the capacity of a radio link using multiple transmission and receiving antennas to exploit multi-path propagation. Therefore, the transmission system can be used for a highly efficient communication between the transmission device and the further receiving device.

According to another embodiment, the first data signal and the second data signal are transmitted by the same antenna of the multiple input multiple output device. In particular, the antenna of the MIMO may be divided into a first sub-array and a second sub-array. The first sub-array and the second sub-array may transmit at the same time and on the same frequency band.

In alternative embodiment, the first sub-array and the second sub-array may transmit with different communication signals, for example, the first sub-array may communicate with WIFI or 5G. The first sub-array may be used for adjusting the reflection angle by the transmission between the second sub-array and the further receiving devices. The alternative method of a time-division-duplex, where the transmission device first sends the desired reflection angle to the reconfigurable intelligent surface controller and then subsequently sends the signal intended for the further receiving device to the reconfigurable intelligent surface device array, lacks the capability to make adjustments to the reflection angle in real-time, but is also possible. The alternative method of a frequency-division-duplex requires additional frequency resources.

According to another embodiment, the first data signal and the second data signal are transmitted simultaneously. Therefore, an easy way to adjust the reflection angle without additional frequency resources is provided.

In another embodiment, the transmission device and/or the reconfigurable intelligent surface device, and in particular the further receiving device, may be configured as a movable device. Therefore, the signal transmission system is highly flexible and also a communication between movable devices can be provided.

According to another embodiment, the transmission device is configured for determining at least a position of the reconfigurable intelligent surface device, in particular from the further receiving device, too. For example, the transmission device may get an information about the position of the reconfigurable intelligent surface device from another source, for example from a capturing device of the surroundings. This may also be received for the further receiving device. Alternatively, the transmission device may be configured for capturing the surroundings and determining a position of the reconfigurable intelligent surface device and the further receiving device, for example by using a capturing device from the transmission device and/or by using a sensing signal, which may also be transmitted in the surroundings by the same antenna as the first data signal and the second data signal, and therefore, the current position of the reconfigurable intelligent surface device as well as from the further receiving device may be determined. Therefore, a highly precise transmitting of the first data signal and the second data signal may be realized.

According to another embodiment, the first receiving device is located at a different location of the reconfigurable intelligent surface device than the second receiving device. In particular, the first receiving device and the second receiving device are located at the reconfigurable intelligent surface device, but on different places/locations. Therefore, interference between the first data signal and the second data signal may be minimized. Therefore, a high quality of the communication may be provided.

In particular, the method is a computer-implemented method. Therefore, another aspect of the present invention relates to a computer program product, comprising program code means for performing a method according to the preceding aspect.

A still further aspect of the invention relates to a computer-readable storage medium comprising at least the computer program product according to the preceding aspect.

Furthermore, the invention relates to a signal transmission system for wireless transmitting a data signal in the surroundings, comprising at least the transmission device and the reconfigurable intelligent surface device, wherein the signal transmission device is configured for performing a method according to the preceding aspect. In particular, the method is performed by the signal transmission system.

The transmission device as well as the reconfigurable intelligent surface device, in particular also the further receiving device, may comprise controllers, in particular electronic computing devices, for generating signals, for example transmitting signals, and for analyzing signals. Therefore, the controllers and/or electronic computing devices may comprise processors, circuits, in particular integrated circuits, and further electronic means, for performing individual steps of the method.

Independent of the grammatical term usage, individuals with male, female or other gender identities are included within the term.

Further features of the invention result from the claims, the figures and the figure description. The features and combinations of features mentioned above in the description, as well as the features and combinations of features mentioned below in the figure description and/or shown alone in the figures, can be used not only in the combination indicated in each case, but also in other combinations without departing from the scope of the invention.

The invention will now be explained in more detail with reference to preferred examples of embodiments and with reference to the accompanying drawings.

Therefore,
- FIG 1: shows a schematic block diagram according to an embodiment of a signal transmission system; and
- FIG 2: shows another schematic block diagram according to another embodiment of the signal transmission system.

In the figures, same elements are shown with the same reference signs.

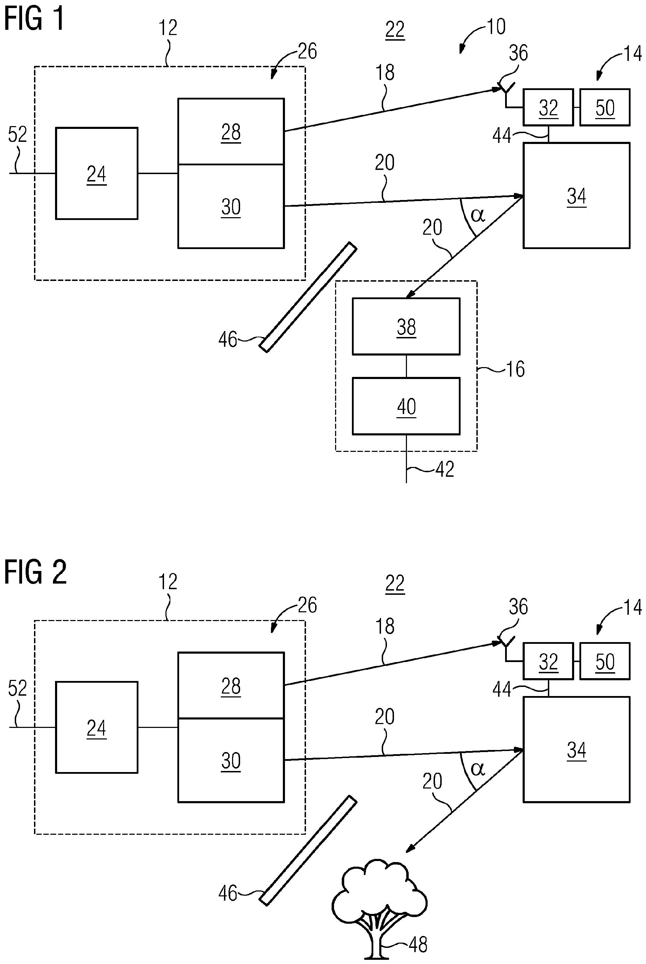

FIG 1 shows a schematic block diagram according to an embodiment of a signal transmission system 10. The signal transmission system 10 comprises at least a transmission device 12 as well as a reconfigurable intelligent surface device 14. Furthermore, according to the shown embodiment, the signal transmission system 10 comprises a further receiving device 16.

The signal transmission system 10 is configured for wireless transmitting a data signal 18, 20 in the surroundings 22.

Furthermore, FIG 1 shows that the transmission device 12 comprises a processing unit 24 for processing a protocol and/or a signal. The transmission device 12 comprises further an antenna 26, which is divided into a first sub-array 28 and a second sub-array 30.

The reconfigurable intelligent surface device 14 comprises a power unit/power supply 50 as well as a controller 32. The power unit 30 is configured for providing electrical power for the controller 32. Furthermore, the reconfigurable intelligent surface device 14 comprises an array 34, which may also be regarded as a second receiving device. The array 34 may also be regarded as metamaterials. Furthermore, the reconfigurable intelligent surface device 14 comprises a first receiving device 36.

The further receiving device 16 comprises a further antenna 38 as well as a further processing unit 40.

According to the shown embodiment, a data input 52 is provided for the processing unit 24, and a data output 42 is provided from the further processing unit 40.

According to an embodiment of a method for wireless transmitting a data signal 18, 20, a first data signal 18 is generated by the transmission device 12, wherein the first data signal 18 comprises an information for a reflection angle α to be set by the reconfigurable intelligent surface device 14. The first data signal 18 is transmitted to the first receiving device 36 of the reconfigurable intelligent surface device 14. A second data signal 20 is generated by the transmission device 12, wherein the second data signal 20 is a working signal. The second data signal 20 is transmitted to the second receiving device, in particular to the array 34, of the reconfigurable intelligent surface device 14. A control signal 44 for controlling a status of metamaterials of the reconfigurable intelligent surface device 14 is generated depending on the first data signal 18. The second data signal 20 is reflected by the reconfigurable intelligent surface device 14 with the transmitted reflection angle α.

As shown in FIG 1, the working signal may be a communication signal. Furthermore, the first data signal 18 and the second data signal 20 are directly transmitted to the corresponding receiving devices. Furthermore, the second data signal 20 is transmitted to the further receiving device 16 of the signal transmission system 10.

Furthermore, FIG 1 shows that the further receiving device 16 is hidden relative to the transmission device 12. Therefore, in FIG 1, an obstacle 46 is shown. This means that the transmission device 12 and the further receiving device 16 are not in a line of sight and therefore, the reconfigurable intelligent surface device 14 is used as an intelligent mirror.

Furthermore, FIG 1 shows that the transmission device 12, in particular the antenna 26, is configured as a multiple input multiple output device (MIMO). Furthermore, also the further antenna 38 may be configured as multiple input multiple output device. Therefore, FIG 1 shows that the first data signal 18 and the second data signal 20 are transmitted by the same antenna 26 of the multiple input multiple output device.

Furthermore, the first data signal 18 and the second data signal 20 are transmitted simultaneously.

FIG 2 shows another schematic block diagram according to an embodiment of the invention. FIG 2 shows that the working signal may also be a so-called sensing signal. For example, an object 48 in the surroundings 22 may be captured by the reflected working signal/second data signal 20/sensing signal. For example, the sensing signal may be either scattered back along the same path to the transmission device 12 or it is received by a still further receiving device.

Furthermore, the transmission device 12 and/or the reconfigurable intelligent surface device 14 and/or the further receiving device 16 may be configured as a movable device. For example, the transmission device 12 may be arranged at a motor vehicle or furthermore. Therefore, for example, the transmission device is configured for determining at least a position of the reconfigurable intelligent surface device 14 and/or of the further receiving device 16.

Furthermore, FIG 2 shows that the first receiving device 36 is located at a different place/location of the reconfigurable intelligent surface device 16 than the second receiving device.

In particular, FIGs 1 and 2 show that the transmission device 12 is configured to establish a communication link with, for example, the further receiving device 16. Because there may be direct communication path between the transmission device 12 and the further receiving device 16, a smart mirror, in particular the reconfigurable intelligent surface device 14, may be used as a mirror.

Therefore, the antenna 26 may be divided into two virtual sub-arrays 28, 30, such that two beams can be transmitted simultaneously in different spatial directions. A wireless communication interface is introduced at the controller 32. The antenna, in particular the first receiving device 36, of the controller 32 and the array 34 are physically spaced apart at a distance that depends on a beam forming resolution of the resulting virtual MIMO sub-arrays 28, 30 of the antenna 26, such that the beams of the first sub-array 28 and the second sub-array 30 do not interfere. A communication signal, in particular the second data signal 20, is transmitted from the first sub-array 28, in particular the first data signal 18 is transmitted from the first sub-array 28, to the controller 32 to configure parameters of the array 34, in particular, for example, the reflection angle α. A further communication signal, in particular the second data signal 20, is transmitted from the second sub-array 30 in the direction of the array 34, with the intention of it being reflected towards the further receiving device 16 and/or the object 48.

As an alternative, the control information for the controller 32 may be originated also from the further receiving device 16.

In particular, FIG 2 shows an adaption of the described method for a wireless sensing of the object 48.

## Claims

1. A method for wireless transmitting a data signal (18, 20) in surroundings (22) by a signal transmission system (10), comprising the steps of:
- generating a first data signal (18) by a transmission device (12) of the signal transmission system (10), wherein the first data signal (18) comprises an information for a reflection angle (α) to be set by a reconfigurable intelligent surface device (14);
- transmitting the first data signal (18) to a first receiving device (36) of the reconfigurable intelligent surface device (14);
- generating a second data signal (20) by the transmission device (12), wherein the second data signal (20) is a working signal;
- transmitting the second data signal (20) to a second receiving device of the reconfigurable intelligent surface device (14);
- generating a control signal (44) for controlling a status of metamaterials of the reconfigurable intelligent surface device (14) depending on the first data signal (18); and
- reflecting the second data signal (20) by the reconfigurable intelligent surface device (14) with the transmitted reflection angle (α).

2. A method according to claim 1, wherein the first data signal (18) and the second data signal (20) are directly transmitted.

3. A method according to claim 1 or 2, wherein the second data signal (20) is transmitted to a further receiving device (16) of the signal transmission system (10).

4. A method according to claim 3, wherein the further receiving device (16) is hidden relative to the transmission device (12) .

5. A method according to any of claims 1 to 4, wherein the working signal is a communication signal comprising a payload.

6. A method according to any of claims 1 to 4, wherein the working signal is a sensing signal for capturing an information of the surroundings (22).

7. A method according to any of claims 1 to 6, wherein the transmission device (12) is configured as a multiple input multiple output device.

8. A method according to claim 7, wherein the first data signal (18) and the second data signal (20) are transmitted by the same antenna (26) of the multiple input multiple output device.

9. A method according to any of claims 1 to 8, wherein the first data signal (18) and the second data signal (20) are transmitted simultaneously.

10. A method according to any of claims 1 to 9, wherein the transmission device (12) and/or the reconfigurable intelligent surface device (14) are configured as a movable device.

11. A method according to any of claims 1 to 10, wherein the transmission device (12) is configured for determining at least a position of the reconfigurable intelligent surface device (14).

12. A method according to any of claims 1 to 11, wherein the first receiving device (36) is located at a different location at the reconfigurable intelligent surface device (14) than the second receiving device.

13. A computer program product comprising program code means for performing a method according to any of claims 1 to 12.

14. A computer-readable storage medium comprising at least the computer program product according to claim 13.

15. A signal transmission system (10) for wireless transmitting a data signal (18, 20) in surroundings (22), comprising at least a transmission device (12) and a reconfigurable intelligent surface device (14), wherein the signal transmission system (10) is configured for performing a method according to any of claims 1 to 2.
